# EUROPEAN PATENT APPLICATION

(11) **EP 1 657 146 A2**
(43) Date of publication of application: **17.05.2006**
(21) Application number: 05024651.1
(22) Date of filing: 11.11.2005
(51) Int. Cl.: B62H 5/00, E05B 67/00

(54) **Padlock with support for two-wheeled vehicles**

(30) Priority: 11.11.2004 ES 200402560 U
(71) Applicant: Luma Industrias, S.A., 20120 Hernani (Guipuzcoa) (ES)
(72) Inventor: Muerza Munilla, Alfredo, 20011 San Sebastian, Guipuzcoa (ES)
(74) Representative: Heinze, Ekkehard

(57) **Abstract**

Padlock with support for two-wheeled vehicles, in particular a padlock that has an ovoid-shaped body (1) that comprises a reinforced enclosure of a lock (2), is anchored at the extreme of a security loop (3) of a flexible nature and which possesses a cavity (4) for insertion of the suspended terminal (5) which, at the other extreme of the security loop (3), is capable of being blocked or not inside said cavity (4) by actuation of the lock (2).

## Description

### SCOPE OF THE INVENTION

This invention concerns a padlock with support for two-wheeled vehicles such as bicycles and motorcycles, in particular, a padlock of the type that generally consists of an ovoid-shaped body that comprises the reinforced encapsulation of a lock, this being anchored at the extreme of a security loop of a flexible nature and which possesses a cavity for the introduction of a suspended terminal and which is capable of being blocked or not inside said cavity by actuation of the lock.

### PRIOR ART

Diverse embodiments of locks are known in this field which use, as the means of securing to prevent theft of the vehicle, a reinforced cable in the form of a loop or a spirally wound cable which, at one extreme, is inseparably linked to the body of the padlock with a lock and which, at the other extreme, has been arranged in such a way that it surrounds some stationary element exterior to the vehicle such as a tree, a traffic light pole, etc., or solely elements of the vehicle itself (the wheel, for example), thus preventing its normal use.

The fact is that, once the padlock has been chosen, it is necessary to look for some kind of support to enable transport of the padlock secured to the vehicle's chassis while it is being used as a means of transport, and the fact that it is transported at some point where it is tucked away in the chassis and is made as immobile as possible to avoid vibrations, which prevent quiet running and are a nuisance for the user and are also harmful to the vehicle's chassis and, if one of these supports is not chosen, it will be highly uncomfortable for the user, who will then have to carry the padlock on his/her own body or hang it from the vehicle's chassis.

At the moment, specific supports for each padlock are already being sold, but are not as simple as this one and, consequently, not as cheap.

### EXPLANATION OF THE INVENTION AND ADVANTAGES

Considering this prior art, the aim of the present invention is a padlock which, within the scope of said invention, responds to a configuration with the peculiarity that, around the mouthpiece of said cavity for blockage of the aerial terminal, the periphery of said ovoid body comprises a flat depression that is flanked by two partitions which, with respect to the outline of this flat depression, extend transversely from the centre to the periphery of the ovoid body, whose flat depression has a contour in the shape of an open "U" towards the periphery which is reciprocal to that of a first flat head, shaped at one extreme of a suspended support which, at its other extreme, comprises a second flat head whose partitions, on their own and/or in conjunction with the flat depression, reach a height that is conveniently greater than the thickness of said first head and whose first and second heads both have first and second orifices that are respectively capable of operating in conjunction with said aerial terminal of the security loop and possesses a security screw for anchoring on the vehicle's chassis.

This structure is aimed at solving the problem posed in a simple, practical and economical manner.

On the other hand, in functional terms, this solution provides a simple means of securing to the vehicle's chassis by means of a screw, at the same time ensuring firm transverse and rotary immobilisation between the body of the padlock and the support. This is due to the fact that, in the transverse direction of the support, it is the suspended terminal itself which, once blocked inside the cavity of the padlock's body, firmly clamps the thickness of the support and, in the rotary direction, it is the partitions that escort the flat depression, thus effectively preventing relative rotation between the support and the body of the padlock.

These and other particularities of the invention are ascertained in the following detailed description of a preferred embodiment, accompanied by attached drawings.

### DRAWINGS AND REFERENCES

To enable a better comprehension of the nature of the present invention, on the drawings attached we present a preferable form of industrial realisation, this having a merely illustrative and non-limiting character.
Figure 1 is a perspective view that shows a padlock body (1) in accordance with the invention that obviates the suspended terminal (5), which appears in Figure 3 and, after that, only the operating point of the security loop (3) is shown.
Figure 2 is a perspective view of one of the various possible realisations of the suspended support (8).
Figure 3 is a perspective view that shows the proposed padlock assembly where the suspended support (8) is fixed to the body (1) of the padlock and where a security screw (13) has been incorporated.
Figure 4 is an orthogonally projected view that shows the body (1) of the padlock by the front of the flat depression (6).
Figure 5 is the bottom outline view corresponding to Figure 4.
Figure 6 is a profile view of the suspended support (8) shown in figure 2.
Figure 7 is the top outline view corresponding to Figure 6.

### The following references are indicated in these figures:

- 1: Padlock body
- 2: Lock
- 3: Security loop
- 4: Cavity of the body (1)
- 5: Suspended terminal of the security loop (3)
- 6: Flat depression of the body (1)
- 7: Partitions
- 8: Suspended support
- 9: First flat head of the support (1)
- 10: Second flat head of the support (1)
- 11: First orifice in the first head (9)
- 12: Second orifice in the second head (10)
- 13: Security screw

### PRESENTATION OF A PREFERRED EMBODIMENT

In relation to the drawings and references mentioned above, the attached diagrams show a preferred method of realisation of the invention, concerning a padlock for use on two-wheeled vehicles, of the padlocks which have a general structure consisting of an ovoid-shaped body (1) that comprises a reinforced enclosure of a lock (2), is anchored at the extreme of a security loop (3) of a flexible nature and which possesses a cavity (4) for insertion of the suspended terminal (5) which, at the other extreme of the security loop (3), is capable of being blocked or not inside said cavity (4) by actuation of the lock (2).

In accordance with the particular structure of the present invention, around the mouthpiece of said cavity (4), the periphery of said ovoid body (1) comprises a flat depression (6) that is flanked by two partitions (7) which, with respect to the outline of this flat depression (6), extend transversely from the centre to the periphery of the ovoid body (1), whose flat depression (6) has a contour in the shape of an open "U" towards the periphery which is reciprocal to that of a first flat head (9), shaped at one extreme of a suspended support (8) which, at its other extreme, comprises a second flat head (10) whose partitions (7), on their own and/or in conjunction with the flat depression (6), reach a height that is conveniently greater than the thickness of said first head (9) and whose first (9) and second (10) heads both have first (11) and second (12) orifices that are respectively capable of operating in conjunction with said suspended terminal (5) of the security loop (3) and possesses a security screw (13) for anchoring on the vehicle's chassis.

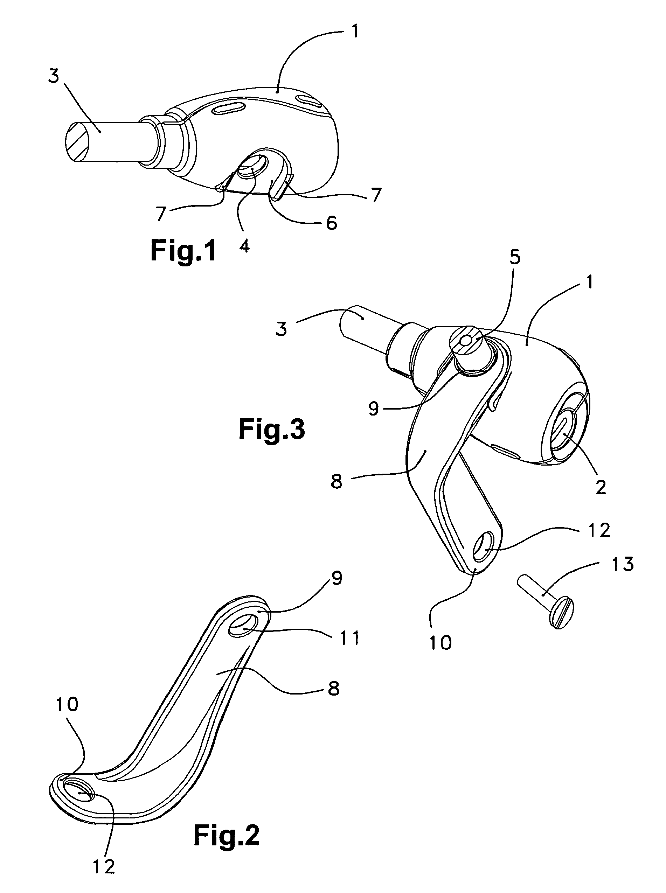

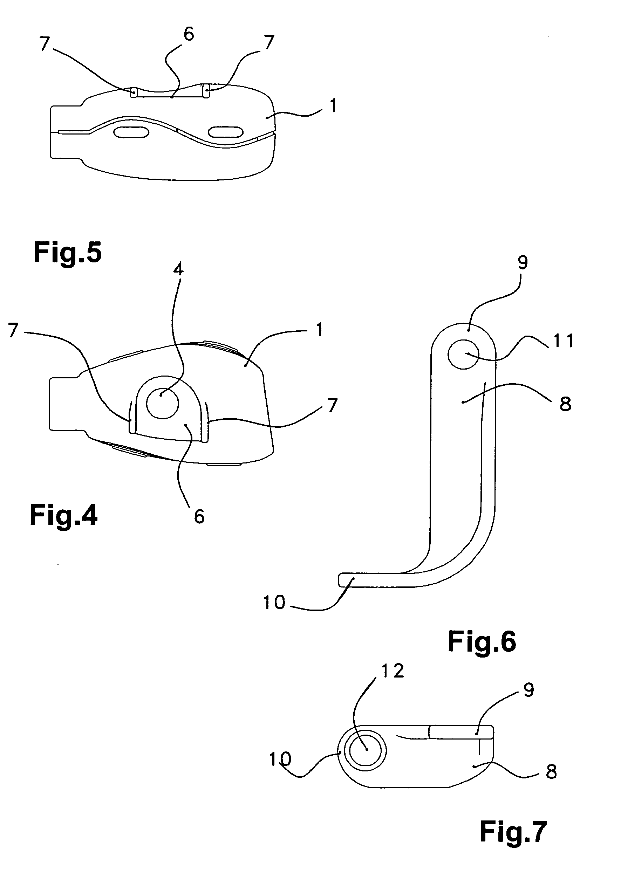

This structure is clearly detailed in Figures 1, 2 and 5 to 7, referring to its integral elements. It functionality is illustrated in Figure 3, where it can be seen how the first flat head (9) of the support (8) is seated in the flat depression (6) of the body (1) and clamped against this latter by insertion and blockage of the suspended support (5) inside the cavity (4) and via the first orifice (11) of the first flat head (9); at the same time it can be seen that said first flat head (9) remains enclosed laterally by the partitions (7) and, consequently, prevented from turning with respect to the body (1); it will suffice that, for example, by means of the tightening screw of the saddle bar, with rapid closing, etc., this assembly consisting of the body (1) and support (8) is fixed to the vehicle's chassis to arrive at a simple and efficient solution to the problem of transporting the padlock without noise or vibrations during travel of the vehicle.

In the drawings, we have opted for a solution with a support (8) folded at a right angle and twisted, obtained on the basis of a plate, but it is obvious that any other angle could be used, that it could be without twisting and that many other possibilities exist. For example: said suspended support (8) could be a straight plate or a plate bent to any angle, for example to a right angle, said suspended support (8) could have a polygonal cross-section between its first (9) and second (10) flat heads, it could also be straight or folded to any angle, for example a right angle, or said suspended support (8) could have a round cross-section (elliptically or otherwise circular) between its first (9) and second (10) flat heads, so that, as before, it would be admissible for it to be straight or folded at any angle, for example at a right angle.

## Claims

1. Padlock with support for two-wheeled vehicles, in particular a padlock that has an ovoid-shaped body (1) that comprises a reinforced enclosure of a lock (2), is anchored at the extreme of a security loop (3) of a flexible nature and which possesses a cavity (4) for insertion of the suspended terminal (5) which, at the other extreme of the security loop (3), is capable of being blocked or not inside said cavity (4) by actuation of the lock (2), **characterised in that**, around the mouthpiece of said cavity (4) the periphery of said ovoid body (1) comprises a flat depression (6) that is flanked by two partitions (7) which, with respect to the outline of this flat depression (6), extend transversely from the centre to the periphery of the ovoid body (1), whose flat depression (6) has a contour in the shape of an open "U" towards the periphery which is reciprocal to that of a first flat head (9) shaped at one extreme as a suspended support (8) which, at its other extreme, comprises a second flat head (10), whose partitions (7), on their own and/or in conjunction with the flat depression (6) reach a height that is conveniently greater than the thickness of said first head (9) and whose first (9) and second (10) flat heads both have first (11) and second (12) orifices that are respectively capable of operating in conjunction with said suspended terminal (5) of the security loop (3) and possesses a security screw (13) for anchoring on the vehicle's chassis.

2. Padlock with support for two-wheeled vehicles, according to claim 1, **characterised in that** said suspended support (8) is a straight plate.

3. Padlock with support for two-wheeled vehicles, according to claim 1, **characterised in that** said suspended support (8) is a plate folded in the form of an angle.

4. Padlock with support for two-wheeled vehicles, according to claim 3, **characterised in that** said suspended support (8) is a plate folded in the form of a right angle.

5. Padlock with support for two-wheeled vehicles, according to claim 1, **characterised in that** said suspended support (8) is a twisted plate folded in the form of an angle.

6. Padlock with support for two-wheeled vehicles, according to claim 5, **characterised in that** said suspended support (8) is a twisted plate folded in the form of a right angle.

7. Padlock with support for two-wheeled vehicles, according to claim 1, **characterised in that** said suspended support (8) is of a polygonal cross-section between its first (9) and second (10) flat heads.

8. Padlock with support for two-wheeled vehicles, according to claim 7, **characterised in that** said suspended support (8) of a polygonal cross-section is straight.

9. Padlock with support for two-wheeled vehicles, according to claim 7, **characterised in that** said suspended support (8), between its first (9) and second (10) flat heads, is of a polygonal cross-section folded to an angle.

10. Padlock with support for two-wheeled vehicles, according to claim 9, **characterised in that** said suspended support (8) of a polygonal cross-section is folded to a right angle.

11. Padlock with support for two-wheeled vehicles, according to claim 1, **characterised in that** said suspended support (8) is of a rounded cross-section between its first (9) and second (10) flat heads.

12. Padlock with support for two-wheeled vehicles, according to claim 11, **characterised in that** said suspended support (8) with a rounded cross-section is straight.

13. Padlock with support for two-wheeled vehicles, according to claim 11, **characterised in that** said suspended support (8), between its first (9) and second (10) flat heads, is folded to an angle.

14. Padlock with support for two-wheeled vehicles, according to claim 13, **characterised in that** said suspended support (8) of a rounded cross-section is folded to a right angle.
